# EUROPÄISCHE PATENTSCHRIFT

(11) **EP 3 841 076 B1**
(45) Veröffentlichungstag und Bekanntmachung des Hinweises auf die Patenterteilung: **04.10.2023**
(21) Anmeldenummer: 19752521.5
(22) Anmeldetag: 14.08.2019
(51) Int. Cl.: C04B 41/85, C04B 35/52, B28B 1/00, B32B 18/00

(54) **ADDITIVE FERTIGUNG VON BAUTEILEN AUF BASIS VON SILIZIUMCARBID MIT EINGEBETTETEN DIAMANTPARTIKELN**
ADDITIVE MANUFACTURE OF COMPONENTS BASED ON SILICON CARBIDE WITH EMBEDDED DIAMOND PARTICLES
FABRICATION ADDITIVE DE COMPOSANTS À BASE DE CARBURE DE SILICIUM À PARTICULES DE DIAMANT INCORPORÉS

(30) Priorität: 20.08.2018 EP 18189786
(43) Veröffentlichungstag der Anmeldung: 30.06.2021
(73) Patentinhaber: KYOCERA Fineceramics Precision GmbH, 95100 Selb (DE)
(72) Erfinder: KATSIKIS, Nikolaos, 95652 Waldsassen (DE); DIENER, Sarah, 95100 Selb (DE); RUSSNER, Carsten, 91207 Lauf a.d Pegnitz (DE)
(74) Vertreter: dompatent von Kreisler Selting Werner - Partnerschaft von Patent- und Rechtsanwälten mbB
(86) Internationale Anmeldenummer: PCT/EP2019/071817
(87) Internationale Veröffentlichungsnummer: WO 2020/038799

(56) Entgegenhaltungen:
- US-A1- 2016 318 808
- US-A1- 2018 087 134
- US-B1- 9 402 322

## Beschreibung

Die vorliegende Erfindung betrifft ein Verfahren zur Herstellung von Bauteilen, die in eine Siliziumcarbid-Matrix eingebettete Diamantpartikel aufweisen sowie mit diesem Verfahren erhältliche Bauteile.

In den letzten Jahren ist ein Trend zu immer höherer Präzision, Miniaturisierung und ökologischer Optimierung in vielen Bereichen zu erkennen, vom Maschinenbau über die Halbleiterfertigung bis zur Luft- und Raumfahrttechnik, produktseitig genauso wie technologisch bei Fräsen, Schleifen, Honen, Bohren oder der additiven Fertigung. Um den stetig steigenden Leistungsanforderungen an elektronische oder mechanische Bauteile gerecht zu werden, besteht somit der Bedarf nach Fertigungsmöglichkeiten, die eine hohe Positionsgenauigkeit und Dimensionsgenauigkeit erlauben.

Insbesondere im Bereich der Halbleiterindustrie hat sich aufgrund seiner hohen Härte und Steifigkeit bei geringer Dichte und niedriger thermischer Ausdehnung der Werkstoff Siliziumcarbid (SiC) als beliebtes Material für Bauteile etabliert. Um die Verschleißbeständigkeit und das Temperaturmanagement solcher Produkte aus Siliziumcarbid zu erhöhen, können dem Siliziumcarbid Diamantpartikel beigemischt werden. Daraus ergeben sich Vorteile in Bezug auf Verschleißfestigkeit, welche auch in anderen Anwendungen gefragt sind, etwa für Werkzeuge wie Fräs-, Hon-, Bohr- oder Schleifwerkzeuge oder Verschleiß-Schutz-Komponenten wie Gleitringe, Düsen, Beläge oder Stifte. Bei gleichzeitiger Implementierung von Kühlkanälen kann darüber hinaus das Temperaturmanagement und damit die Wärmeabführung sowie die Standzeiten oder die Bearbeitungsparameter optimiert werden. Auch eine gewichts- oder anwendungsoptimierte Formgebung etwa in bionischer Art ist möglich.

Im Gegensatz zu konventionellen Materialien wie Silizium infiltriertem Siliziumcarbid (SiSiC), gesintertem Siliciumcarbid (SSiC) oder Glaskeramik verbessert mit Diamant gefülltes Siliziumcarbid (DiaSiC) die erforderlichen Materialeigenschaften sowohl bei daraus hergestellten Werkzeugen zur Bearbeitung von Bauteilen als auch bei den Bauteilen aus DiaSiC. Die herkömmlichen Verarbeitungsverfahren von DiaSiC wie Schlickerguss oder Pressen beschränken jedoch die Integration komplexer Formen, die für anspruchsvolle Anwendungen erforderlich sind. Dies ist insbesondere auf die begrenzten Bearbeitungsmöglichkeiten des mit Diamant gefüllten Siliziumcarbids zurückzuführen, da das nicht-keramisierte Bauteil bei der Bearbeitung hohen Werkzeugverschleiß zeigt, der anfallende Frässtaub in Bezug auf die Diamanten nur schwer wiederverwendbar ist und eine Hartbearbeitung insbesondere bei mit Silizium infiltriertem DiaSiC aufgrund der Hart-Weich-Wechsel zwischen Diamant und metallischen Silizium nur sehr begrenzt möglich ist. Es besteht somit der Bedarf nach einem Verfahren zur Verarbeitung von mit Diamant gefülltem Siliziumcarbid, das die oben genannten Nachteile überwindet.

WO 99/12866 beschreibt ein Verfahren zum Herstellen eines Diamant-Siliziumcarbid-Silizium-Verbundwerkstoffes aus Diamantpartikeln, das die Schritte, ein Werkstück mit einer Porosität von 25 bis 60 Vol.% zu formen, Erhitzen des Werkstücks und Kontrollieren der Heiztemperatur und der Heizzeit, so dass eine bestimmte, erwünschte Menge von Graphit durch Graphitisierung der Diamantpartikel geschaffen wird, wobei ein Zwischenkörper geschaffen wird, wobei die Menge an durch Graphitisierung geschaffenen Graphits 1 bis 50 Gew.-% der Diamantmenge beträgt und Infiltrieren von Silizium in den Zwischenkörper umfasst.

US 8,474,362 beschreibt ein mit Diamanten verstärktes Keramikverbundmaterial auf Basis von Siliziumcarbid. Durch die Zugabe von Diamant konnten Härte und Elastizitätsmodul des Materials erhöht werden, wodurch es sich insbesondere zur Verwendung als Rüstungsmaterial eignet. Das Verbundmaterial wird mittels Sedimentationsgießen hergestellt.

WO 2004/108630 beschreibt ein Verfahren zur Herstellung eines vollausgehärteten Diamant-Siliziumcarbid-Verbundwerkstoffs, bei dem eine Mischung aus mikrokristallinem Diamantpulver und kristallinem Siliziumpulver in einer Kugelmühle vermahlen werden und die erhaltene Mischung anschließen bei einem Druck von 5 GPa bis 8 GPa und einer Temperatur von 1400 K bis 2300 K gesintert wird.

WO 2015/112574 beschreibt ein mehrschichtiges Substrat, das eine Verbundschicht umfassend Diamantpartikel und Siliziumcarbid-Partikel und eine mittels chemischer Dampfabscheidung (CVD) aufgebrachte Diamantschicht auf der Verbundschicht aufweist.

EP 2 915 663 beschreibt ein Verfahren, bei dem abwechselnd Schichten eines keramischen Pulvers und eines prä-keramischen Polymers ausgebracht werden, wobei die Schicht des prä-keramischen Polymers in einer Form ausgebracht wird, die dem Querschnitt eines Objekts entspricht. Bei dem prä-keramischen Polymer handelt es sich vorzugsweise um Poly(hydridocarbin). Auf diese Weise ist ein polykristalliner Diamant, hergestellt aus Detonations-Nanodiamanten und Poly(hydridocarbin), erhältlich.

US 9,402,322 beschreibt ein Verfahren zur Herstellung eines optischen Wellenleiters unter Verwendung eines 3D-Druckers, bei dem eine Vielzahl von Schichten aus Poly(hydrido)carbin in der Geometrie eines Mantels für einen Wellenleiter und eine Vielzahl von Schichten aus Poly(methylsilyn) in Form des Kerns für den Wellenleiter ausgebracht und die Schichten dann erhitzt werden, wobei ein optischer Wellenleiter mit einem Kern aus polykristallinem Siliziumcarbid umgeben von polykristallinem Diamant erhalten wird.

US 2018/0087134 betrifft ein Verfahren zur Herstellung eines polykristallinen Diamantpresskörpers (PDC), wobei eine Gradientengrenzflächenschicht mit einem Gradienten des Wärmeausdehnungskoeffizienten durch Bildung einer Vielzahl von Zwischenschichten, von denen mindestens zwei unterschiedliche Wärmeausdehnungskoeffizienten aufweisen, hergestellt und zwischen einem thermisch stabilen Diamanttisch (TSP) und einer Basis angebracht wird. Der Gradient der Gradientengrenzflächenschicht bewegt sich dabei zwischen dem Wärmeausdehnungskoeffizienten der Basis und dem des thermisch stabilen Diamanttisches.

US 2016/0318808 beschreibt die Verwendung von Diamantpartikel in additiven Fertigungsprozessen.

Die im Stand der Technik beschriebenen Verfahren weisen allerdings den Nachteil auf, dass komplexe Bauteile nur mit sehr großem Aufwand, falls überhaupt, herstellbar sind. Es ist daher die Aufgabe der vorliegenden Erfindung ein Verfahren zur Verfügung zu stellen, das die Herstellung von Bauteilen auf Basis von mit Diamantpartikeln verstärktem Siliziumcarbid in einer hohen Strukturauflösung erlaubt.

Es wurde überraschend gefunden, dass Bauteile mit einer entsprechend hohen Strukturauflösung, auch aus mit Diamantpartikeln verstärktem Siliziumcarbid, mittels additiver Fertigungsmethoden hergestellt werden können.

Daher ist ein erster Gegenstand der vorliegenden Erfindung ein Verfahren gemäß Patentanspruch 1 zur Herstellung eines Bauteils mittels additiver Fertigungsmethoden. Das mit dem erfindungsgemäßen Verfahren hergestellte Bauteil weist in eine Siliziumcarbid-Matrix eingebettete Diamantpartikel auf.Das Verfahren umfasst einen Schritt, in dem eine erste Schicht aus mindestens einem ersten Material auf Basis von Siliziumcarbid ausgebracht wird und einen weiteren Schritt, in dem eine zweite Schicht aus mindestens einem zweiten Material auf Basis von Siliziumcarbid ausgebracht wird, umfasst, wobei mindestens eines der Materialien auf Basis von Siliziumcarbid Diamantpartikel umfasst.

Es wurde überraschend gefunden, dass auf diese Weise auch komplexe und filigrane Strukturen mit einer hohen Auflösung realisiert werden können, die mittels herkömmlicher Herstellungsverfahren wie Pressen nicht zugänglich sind. Auf diese Weise ist es beispielsweise auf einfache und unkomplizierte Art möglich, Bauteile mit einer komplexen Innenstruktur zur Verfügung zu stellen, die sich beispielsweise durch das Vorhandensein von innenliegenden Kühlkanälen ergibt. Es wurde weiterhin überraschend gefunden, dass durch den Einsatz eines Material auf Basis von Siliziumcarbid im Vergleich etwa zu Materialien ohne Siliciumcarbid-Primärpartikel eine verbesserte Formstabilität, auch bei Bauteilen größerer Dimensionen erreicht werden kann, die insbesondere bei der weiteren Verarbeitung des Bauteils von Vorteil ist. Weiterhin wird auf diese Weise ein stabiler

Körper aus einem Material zur Verfügung gestellt, das in folgenden Prozessesschritten, wie beispielsweise dem Infiltrieren mit Silizium von diesem nicht angegriffen wird.

Die beste Strukturauflösung und die höchste Dimensionsgenauigkeit wurden erreicht, wenn die Herstellung des Bauteils in einzelnen Schichten erfolgte. Daher ist eine Ausführungsform des erfindungsgemäßen Verfahrens bevorzugt, in der der Aufbau des Bauteils schichtweise erfolgt. In einer bevorzugten Ausführungsform erfolgt der Aufbau des Bauteils aus mindestens 50 Schichten, vorzugsweise mindestens 70 Schichten.

In einer bevorzugten Ausführungsform ist das additive Fertigungsverfahren ausgewählt aus der Gruppe bestehend aus Stereolithographie (SL), material jetting/direct ink printing (DIP), direct ink writing (DIW), robocasting (FDM), binder jetting (3DP), selektivem Lasersintern und Kombinationen dieser Verfahren.

Diesen Verfahren ist der schichtweise Aufbau des Bauteils während des Herstellungsverfahrens gemein. Daher umfasst das erfindungsgemäße Verfahren einen Schritt, in dem eine erste Schicht aus einem mindestens ersten Material auf Basis von Siliziumcarbid ausgebracht wird und einen weiteren Schritt, in dem eine zweite Schicht aus mindestens einem zweiten Material auf Basis von Siliziumcarbid ausgebracht wird, wobei mindestens eines der Materialien Diamantpartikel umfasst. Die Diamantpartikeln sind ausgewählt aus der Gruppe bestehend aus Nano-Diamantpartikeln, Mikro-Diamantpartikeln und Mischungen davon.

Nano-Diamantpartikel bezeichnet im Rahmen der vorliegenden Erfindung Diamantpartikel mit einer Partikelgröße von nicht mehr als 200 nm. Als Mikro-Diamantpartikel werden im Rahmen der vorliegenden Erfindung Diamantpartikel mit einer Partikelgröße von wenigstens 2 µm bezeichnet. Die Partikelgröße kann dabei beispielsweise mittels Laserdiffraktometrie bestimmt werden.

Die im Rahmen des erfindungsgemäßen Verfahrens verwendeten Nano-Diamantpartikel weisen eine Partikelgröße von 40 bis 160 nm, vorzugsweise 50 bis 150 nm auf, jeweils bestimmt mittels Laserdiffraktometrie. Die im Rahmen des erfindungsgemäßen Verfahrens verwendeten Mikro-Diamantpartikel weisen eine Partikelgröße von 3 bis 300 µm, vorzugsweise 4 bis 100 µm auf, besonders bevorzugt 30 bis 300 µm, insbesondere 40 bis 100 µm, jeweils bestimmt mittels Laserdiffraktometrie. In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

In einer bevorzugten Ausführungsform weist das erste Material auf Basis von Siliziumcarbid darin eingebettete Mikro-Diamantpartikel auf, wobei die Mikro-Diamantpartikel vorzugsweise eine Partikelgröße von 3 bis 300 µm, besonders bevorzugt 4 bis 100 µm, vor allem bevorzugt 30 bis 300 µm, insbesondere 40 bis 100 µm aufweisen, jeweils bestimmt mittels Laserdiffraktometrie. In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

In einer weiterhin bevorzugten Ausführungsform weist das zweite Material auf Basis von Siliziumcarbid darin eingebettete Nano-Diamantpartikel auf, wobei die Nano-Diamantpartikel vorzugsweise eine Partikelgröße von 40 bis 160 nm, besonders bevorzugt 50 bis 150 nm aufweisen. In einer weiterhin bevorzugten Ausführungsform weist das erste Material auf Basis von Siliziumcarbid darin eingebettete Nano-Diamantpartikel auf, wobei die Nano-Diamantpartikel vorzugsweise eine Partikelgröße von 40 bis 160 nm, besonders bevorzugt 50 bis 150 nm aufweisen. In einer weiterhin bevorzugten Ausführungsform weist das zweite Material auf Basis von Siliziumcarbid darin eingebettete Mikro-Diamantpartikel auf, wobei die Mikro-Diamantpartikel vorzugsweise eine Partikelgröße von 3 bis 300 µm, besonders bevorzugt 4 bis 100 µm aufweisen. Die Partikelgröße kann dabei jeweils mittels Laserdiffraktometrie bestimmt werden. Besonders bevorzugt weisen die Mikro-Diamantpartikel eine Partikelgröße von 3 bis 300 µm, vorzugsweise 4 bis 100 µm auf, besonders bevorzugt 30 bis 300 µm, insbesondere 40 bis 100 µm, jeweils bestimmt mittels Laserdiffraktometrie. In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

In einer bevorzugten Ausführungsform handelt es sich bei den Diamantpartikeln um eine Mischung aus Diamantpartikeln, wobei die Mischung vorzugsweise Nano-Diamantpartikel und Mikro-Diamantpartikel umfasst, wobei die Nano-Diamantpartikel vorzugsweise eine Partikelgröße von 40 bis 160 nm, insbesondere 50 bis 150 nm und die Mikro-Diamantpartikel vorzugsweise eine Partikelgröße von 3 bis 300 µm, vorzugsweise 4 bis 100 µm auf, besonders bevorzugt 30 bis 300 µm, insbesondere 40 bis 100 µm, jeweils bestimmt mittels Laserdiffraktometrie. In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

In einer weiterhin bevorzugten Ausführungsform weist das erfindungsgemäße Verfahren weiterhin einen Schritt auf, in dem eine Schicht ausgebracht aus einem Material auf Basis von Siliziumcarbid ausgebracht wird, das keine Diamantpartikel aufweist. Dieser Schritt kann jederzeit während des erfindungsgemäßen Verfahrens ausgeführt werden, vorzugsweise vor Ausbringen der ersten Schicht oder zwischen dem Ausbringen der ersten Schicht und der zweiten Schicht oder nach Ausbringen der ersten und/oder zweiten Schicht.

In einer weiterhin bevorzugten Ausführungsform weisen die verwendeten Diamantpartikel eine Beschichtung auf.

Es wurde überraschend gefunden, dass das erfindungsgemäße Verfahren die Herstellung von Bauteilen erlaubt, deren Zusammensetzung, beispielsweise hinsichtlich der Menge, Partikelform oder Partikelgröße der Diamantpartikel über das Volumen des Bauteils variiert. Diese Variation kann insbesondere über die Verwendung verschiedener Materialien auf Basis von Siliziumcarbid erreicht werden. Vorzugsweise ist das erste Material auf Basis von Siliziumcarbid und das zweite Material auf Basis von Siliziumcarbid gleich oder verschieden.

Das mindestens erste und/oder das mindestens zweite Material wird erfindungsgemäß in Form eines Schlickers ausgebracht. Der Schlicker kann dabei zusätzlich zu dem Material auf Basis von Siliziumcarbid weitere Komponenten auf weisen, die aus der Liste ausgewählt sind, die aus Diamantpartikeln, Graphit, Ruß und organischen Verbindungen besteht. Vorzugsweise weist der Schlicker weiterhin eine flüssige Komponente auf. Vorzugsweise handelt es sich bei der flüssigen Komponente um eine Komponente, die ausgewählt ist aus der Gruppe bestehend aus Wasser, organischen Lösungsmitteln und Mischungen davon.

In einer bevorzugten Ausführungsform umfasst das erfindungsgemäße Verfahren weiterhin das Ausbringen eines Binders, wobei der Binder vorzugsweise gemäß dem gewünschten Querschnitt des herzustellenden Bauteils ausgebracht wird. Der Binder weist vorzugsweise eine oder mehrere organische Verbindungen auf, die ausgewählt sind aus der Gruppe bestehend aus Harzen, Polysacchariden, Polyvinylalkohol, Cellulose und Cellulosederivaten, Ligninsulfonaten, Polyethylenglykol, Polyvinylderivate, Polyacrylaten und Mischungen hiervon.

Die additive Fertigungsmethode zur Herstellung eines Bauteils, das in eine Siliziumcarbid-Matrix eingebettete Diamantpartikel aufweist, ist vorzugsweise von der Methode des Direct Ink Writing abgeleitet. Daher umfasst das erfindungsgemäße Verfahren in einer bevorzugten Ausführungsform die folgenden Schritte:
a) Ausbringen mindestens eines ersten Materials auf Basis von Siliziumcarbid, wobei das Material in Form eines Stranges ausgebracht wird, der der gewünschten Geometrie des späteren Bauteils entspricht, unter Erhalt einer ersten Schicht;
b) Ausbringen mindestens eines zweiten Materials auf Basis von Siliziumcarbid, auf mindestens einem Teil der ersten Schicht, wobei das Material in Form eines Stranges ausgebracht wird, der der gewünschten Geometrie des späteren Bauteils entspricht, unter Erhalt einer zweiten Schicht;
c) Wiederholen der Schritte a) und b) bis zum Erhalt des gewünschten Bauteils,
wobei mindestens eines der beiden Materialien auf Basis von Siliziumcarbid Diamantpartikel umfasst, vorzugsweise solche, die ausgewählt sind aus der Gruppe bestehend aus Nano-Diamantpartikeln, Mikro-Diamantpartikel und Mischungen davon. Die Nano-Diamantpartikel weisen dabei vorzugsweise eine Partikelgröße von 40 bis 160 nm, insbesondere 50 bis 150 nm und die Mikro-Diamantpartikel vorzugsweise eine Partikelgröße von 3 bis 300 µm, besonders bevorzugt 4 bis 100 µm auf, vor allem 30 bis 300 µm, insbesondere 40 bis 100 µm, jeweils bestimmt mittels Laserdiffraktometrie. In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

In einer bevorzugten Ausführungsform dieser Alternative umfasst das erfindungsgemäße Verfahren weiterhin einen oder mehrere Trocknungsschritte. Die Trocknung wird dabei vorzugsweise jeweils nach dem Ausbringen des ersten und/oder zweiten Materials vorgenommen. Weiterhin bevorzugt sind das erste Material und/oder das zweite Material gleich oder verschieden.

In einer weiterhin bevorzugten alternativen Ausführungsform umfasst das erfindungsgemäße Verfahren die folgenden Schritte:
a) Ausbringen eines ersten Schlickers umfassend Siliziumcarbid unter Erhalt einer ersten Schicht;
b) Aushärten mindestens eines Teils der ersten Schicht entsprechend der gewünschten Geometrie des späteren Bauteils;
c) Ausbringen eines zweiten Schlickers umfassend Siliziumcarbid unter Erhalt einer zweiten Schicht;
d) Aushärten mindestens eines Teils der ersten Schicht entsprechend der gewünschten Geometrie des späteren Bauteils;
e) Wiederholen der Schritte a) bis d) bis zum Erhalt des gewünschten Bauteils,
wobei mindestens einer der Schlicker weiterhin Diamantpartikel umfasst vorzugsweise solche, die ausgewählt sind aus der Gruppe bestehend aus Nano-Diamantpartikeln, Mikro-Diamantpartikel und Mischungen davon. Die Nano-Diamantpartikel weisen dabei vorzugsweise eine Partikelgröße von 40 bis 160 nm, insbesondere 50 bis 150 nm und die Mikro-Diamantpartikel vorzugsweise eine Partikelgröße von 3 bis 300 µm, besonders bevorzugt 4 bis 100 µm auf , vor allem 30 bis 300 µm, insbesondere 40 bis 100 µm, jeweils bestimmt mittels Laserdiffraktometrie. In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

In einer bevorzugten Ausführungsform umfasst der erste und/oder der zweite Schlicker weiterhin photoaktive Polymere. Diese Polymere sind vorzugsweise ausgewählt aus der Gruppe bestehend aus harzbasierten Acrylaten oder wasserbasierten Acrylamiden, Farbstoffen zur Energieumwandlung, Polysacchariden, Glykosaminoglykan-Derivaten basierend auf Dextran, Hyaluronan oder Chondroitin Sulfaten. Weiterhin weist der erste und/oder der zweite Schlicker vorzugsweise eine weitere Kohlenstoffquelle, vorzugsweise Graphit oder Ruß, weitere organische Bestandteile und eine flüssige Phase auf. Bei der flüssigen Phase kann es sich beispielsweise um Wasser, organische Lösungsmittel oder Mischungen davon handeln. In einer bevorzugten Ausführungsform sind der erste und der zweite Schlicker gleich oder verschieden.

Die Aushärtung in den Schritten b) und d) der beschriebenen Alternative des erfindungsgemäßen Verfahrens erfolgt vorzugsweise mittels Laser.

In einer weiterhin bevorzugten Alternative umfasst das erfindungsgemäße Verfahren die folgenden Schritte:
a) Ausbringen eines ersten Materials auf Basis von Siliziumcarbid;
b) Ausbringen eines Binders gemäß der gewünschten Geometrie des späteren Bauteils;
c) optional Trocknen des Binders;
d) Ausbringen eines zweiten Materials auf Basis von Siliziumcarbid;
e) Ausbringen eines Binders gemäß der gewünschten Geometrie des späteren Bauteils;
f) optional Trocknen des Binders; und
g) Wiederholen der Schritte a) bis f) bis zum Erhalt des gewünschten Bauteils,
wobei mindestens eines der beiden Materialien auf Basis von Siliziumcarbid Diamantpartikel umfasst, vorzugsweise solche, die ausgewählt sind aus der Gruppe bestehend aus Nano-Diamantpartikeln, Mikro-Diamantpartikel und Mischungen davon. Die Nano-Diamantpartikel weisen dabei vorzugsweise eine Partikelgröße von 40 bis 160 nm, insbesondere 50 bis 150 nm und die Mikro-Diamantpartikel vorzugsweise eine Partikelgröße von 3 bis 300 µm, insbesondere 4 bis 100 µm auf, vor allem 30 bis 300 µm, insbesondere 40 bis 100 µm, jeweils bestimmt mittels Laserdiffraktometrie.

In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

In einer bevorzugten Ausführungsform dieser Alternative sind das erste Material und/oder das zweite Material gleich oder verschieden.

Das erste und das zweite Material werden in Form eines Schlickers ausgebracht, wobei das erfindungsgemäße Verfahren vorzugsweise weiterhin einen Schritt umfasst, in dem die mittels Schlicker ausgebrachten Schichten getrocknet werden.

In einer bevorzugten Ausführungsform umfasst das erfindungsgemäße Verfahren weiterhin einen Entformungsschritt unter Erhalt des gewünschten Bauteils. Dabei wird überflüssiges Material entfernt, das während des Herstellungsprozesses angefallen ist. Bei diesem Entformungsschritt besteht bei herkömmlichen Verfahren in der Regel die Gefahr, dass das Bauteil aufgrund mangelnder Formstabilität beschädigt wird. Im Rahmen der vorliegenden Erfindung wurde für eine Verfahrensart überraschend gefunden, dass das Entformen auf einfache Weise mittels Waschen vorgenommen werden kann, ohne dass es zu einer Beeinträchtigung des Bauteils kommt. Daher ist eine Ausführungsform bevorzugt, in der der Entformungsschritt das Waschen des Bauteils mit einem flüssigen Medium umfasst, wobei das flüssige Medium vorzugsweise Wasser, organische Lösungsmittel oder Mischungen davon ist.

In einer weiterhin bevorzugten Ausführungsform des erfindungsgemäßen Verfahrens wird das Bauteil weiterhin einem Entbinderungsschritt unterzogen. Das Entfernen des Binders erfolgt dabei vorzugsweise thermisch durch Erwärmen des Bauteils.

In einer weiterhin bevorzugten Ausführungsform umfasst das erfindungsgemäße Verfahren weiterhin das Sintern des erhaltenen Bauteils. Durch das Sintern kann dem Bauteil weitere Festigkeit verliehen werden. Das Sintern erfolgt dabei vorzugsweise ohne zusätzlichen Druck, das heißt bei einem Druck, der dem Umgebungsdruck entspricht (Normaldruck) oder darunter. Unter Normaldruck wird ein Druck verstanden, der dem mittleren Wert des Luftdrucks an der Erdoberfläche entspricht und bei 100 kPa bis 102 kPa (1 bis 1,02 bar) beträgt. Das "drucklose" Sintern hat den Vorteil, dass auch filigrane Strukturen oder innenliegende Strukturen, die während des Herstellungsprozesses ausgebildet wurden, auch bei beziehungsweise nach dem Sintern erhalten bleiben.

Im Rahmen des erfindungsgemäßen Verfahrens erfolgt das Keramisieren des Bauteils vorzugsweise durch einen Infiltrationsschritt. Es hat sich gezeigt, dass die Eigenschaften des mittels des erfindungsgemäßen Verfahrens erhaltenen Bauteils durch eine Infiltration des Bauteils mit Silizium verbessert werden können. Daher ist eine Ausführungsform bevorzugt, in der das erfindungsgemäße Verfahren weiterhin einen Schritt umfasst, in dem das erhaltene Bauteil weiterhin einem Infiltrationsschritt mit Silizium unterzogen wird. Hierzu kann auf dem Fachmann bekannte Methoden zurückgegriffen werden, wie beispielsweise eintauchen in schmelzflüssiges Silizium, gemeinsames Aufschmelzen des Bauteils und des Siliziums, wobei das Silizium als Schüttung, Kuchen oder Schlicker direkt oder indirekt über Dochte oder Zwischenplatten zugeführt wird.

Ein weiterer Gegenstand der vorliegenden Erfindung ist ein Bauteil, das in eine Siliziumcarbid-Matrix eingebettete Diamantpartikel aufweist, vorzugsweise solche, die ausgewählt sind aus der Gruppe bestehend aus Nano-Diamantpartikeln, Mikro-Diamantpartikel und Mischungen davon. Die Nano-Diamantpartikel weisen dabei vorzugsweise eine Partikelgröße von 40 bis 160 nm, insbesondere 50 bis 150 nm und die Mikro-Diamantpartikel vorzugsweise eine Partikelgröße von 3 bis 300 µm, insbesondere 4 bis 100 µm auf, besonders bevorzugt 30 bis 300 µm, insbesondere 40 bis 100 µm, jeweils bestimmt mittels Laserdiffraktometrie. In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

Das erfindungsgemäße Bauteil ist erhältlich nach dem erfindungsgemäßen Verfahren. Es wurde überraschend gefunden, dass solche Bauteile eine hohe Strukturauflösung und eine hohe Dimensionsgenauigkeit aufweisen. Daher ist eine Ausführungsform bevorzugt, in der es sich bei dem Bauteil um ein Bauteil mit einer komplexen Geometrie handelt. Das erfindungsgemäße Bauteil weist mindestens eine makroskopisch strukturierte Oberfläche auf, wobei die strukturierte Oberfläche beispielsweise Vorsprünge und/oder Absätze aufweist, und/oder innenliegende Strukturen, wie beispielsweise Kanäle.

Es wurde weiterhin überraschend gefunden, dass der Anteil an Diamantpartikeln in dem Bauteil gegenüber herkömmlichen Herstellungsverfahren deutlich erhöht werden konnte. Daher ist eine Ausführungsform bevorzugt, in der das Bauteil eine Konzentration an Diamantpartikeln von 30 bis 80 Vol.-%, vorzugsweise 40 bis 70 Vol.-% aufweist, jeweils bezogen auf das Gesamtvolumen des Bauteils.

Das erfindungsgemäße Verfahren erlaubt die Herstellung von Bauteilen, deren Eigenschaften individuell an die jeweiligen Anforderungen angepasst werden können, beispielsweise durch Verwendung unterschiedlicher Materialien auf Basis von Siliziumcarbid. Auf diese Weise können beispielsweise die Konzentration, die Größe und die Form der Diamantpartikel im Bauteil über dessen Gesamtvolumen variiert werden. So können Bauteile erhalten werden, die einen entsprechenden Gradienten aufweisen.

Daher ist eine Ausführungsform bevorzugt, in der die Konzentration der Diamantpartikel über das Gesamtvolumen des Bauteils variiert. So kann beispielsweise ein Bauteil zur Verfügung gestellt werden, das in oberflächennahen Schichten eine höhere Konzentration an Diamantpartikeln aufweist als in innerliegenden Schichten.

In einer bevorzugten Ausführungsform weist das erfindungsgemäße Bauteil eine Mischung aus Diamantpartikeln auf, die Nano-Diamantpartikel und Mikro-Diamantpartikel umfasst. Die Nano-Diamantpartikel weisen vorzugsweise eine Partikelgröße von 40 bis 160 nm, vorzugsweise 50 bis 150 nm auf. Die Mikro-Diamantpartikel weisen vorzugsweise eine Partikelgröße von 3 bis 300 µm, vorzugsweise 4 bis 100 µm auf. Die Partikelgröße kann beispielsweise mittels Laserdiffraktometrie bestimmt werden. Die im Bauteil enthaltenen Mikro-Diamantpartikel weisen vorzugsweise eine Partikelgröße von 3 bis 300 µm, vorzugsweise 4 bis 100 µm auf, besonders bevorzugt 30 bis 300 µm, insbesondere 40 bis 100 µm, jeweils bestimmt mittels Laserdiffraktometrie. In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

Es hat sich als vorteilhaft erwiesen, wenn das Bauteil einen Gradienten bezüglich der Partikelgröße der Diamantpartikel aufweist. Auf diese Weise können die Eigenschaften von Nano-Diamantpartikeln und Mikro-Diamantpartikel auf vorteilhafte Weise kombiniert werden. Nano-Diamantpartikel weisen in Bezug auf Formgebung oder Homogenität des Gefüges große Vorteile auf, welche insbesondere im Randbereich eines Bauteils oder Werkzeugs hoch erwünscht sind. Mikro-Diamanten hingegen lassen sich aus wirtschaftlicher und technischer Hinsicht einfacher in eine keramische Matrix einbinden und erfüllen gleichzeitig gewünschte Eigenschaften wie hohe Wärmeleitfähigkeit, hoher Elastizitätsmodul oder hohe Bruchzähigkeit. Daher ist eine Ausführungsform des erfindungsgemäßen Bauteils bevorzugt, bei der die Partikelgröße der Diamantpartikel über das Gesamtvolumen des Bauteils variiert. Insbesondere ist eine Ausführungsform bevorzugt, bei der die Diamantpartikel von der Oberfläche des Bauteils zu dessen Zentrum sukzessiv nach zunehmender Größe verteilt sind.

Besonders bevorzugt ist eine Ausführungsform, bei der das erfindungsgemäße Bauteil mehrere Schichten umfasst, insbesondere eine Basisschicht, die frei von Diamantpartikeln ist, eine Zwischenschicht, die Mirko-Diamantpartikel umfasst und eine Deckschicht, die Nano-Diamantpartikel umfasst.

In einer bevorzugten Ausführungsform variiert die Form der Diamantpartikel über das Gesamtvolumen des Bauteils.

In einer weiterhin bevorzugten Ausführungsform variiert die Zusammensetzung des Bauteils über dessen Gesamtvolumen. Dies kann beispielsweise durch die Zugabe verschiedener Zusätze zu den zur Herstellung des Bauteils verwendeten Materialien auf Basis von Siliziumcarbid erreicht werden.

Ein weiterer Gegenstand der vorliegenden Erfindung ist die Verwendung von in eine Siliziumcarbid-Matrix eingebetteter Diamantpartikel in schlickerbasierten additiven Fertigungsverfahren. Vorzugsweise handelt es sich bei den Diamantpartikeln um solche, die ausgewählt sind aus der Gruppe bestehend aus Nano-Diamantpartikeln, Mikro-Diamantpartikel und Mischungen davon. Die Nano-Diamantpartikel weisen dabei vorzugsweise eine Partikelgröße von 40 bis 160 nm, insbesondere 50 bis 150 nm und die Mikro-Diamantpartikel vorzugsweise eine Partikelgröße von 3 bis 300 µm, insbesondere 4 bis 100 µm auf, , besonders bevorzugt 30 bis 300 µm, insbesondere 40 bis 100 µm, jeweils bestimmt mittels Laserdiffraktometrie. In einer alternativ bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

In einer besonders bevorzugten Ausführungsform handelt es sich bei den Diamantpartikeln um eine Mischung aus Nano-Diamantpartikeln und Mikro-Diamantpartikeln, wobei die Nano-Diamantpartikel eine Partikelgröße von 40 bis 160 nm, vorzugsweise 50 bis 150 nm aufweisen und die Mikro-Diamantpartikel eine Partikelgröße von 3 bis 300 µm, vorzugsweise 4 bis 100 µm aufweisen, besonders bevorzugt 30 bis 300 µm, insbesondere 40 bis 100 µm, jeweils bestimmt mittels Laserdiffraktometrie. In einer alternative bevorzugten Ausführungsform weisen die Mikro-Diamantpartikel eine Partikelgröße von 3 bis 10 µm und/oder 25 bis 45 µm auf, jeweils bestimmt mittels Laserdiffraktometrie.

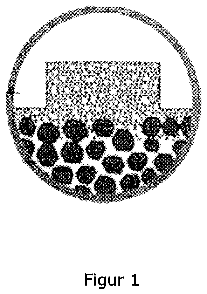

Figur 1 zeigt einen exemplarischen Aufbau eines erfindungsgemäßen Bauteils aus Siliziumcarbid, das einen Gradienten der Partikelgröße der in die Siliziumcarbid-Matrix eingebetteten Diamantpartikel aufweist.

## Patentansprüche

1. Verfahren zur Herstellung eines Bauteils mittels additiver Fertigungsverfahren, **dadurch gekennzeichnet, dass** das Bauteil in eine Siliziumcarbid-Matrix eingebettete Diamantpartikel aufweist, **dadurch gekennzeichnet, dass** das Verfahren einen Schritt, in dem eine erste Schicht aus mindestens einem ersten Material auf Basis von Siliziumcarbid ausgebracht wird und einen weiteren Schritt, in dem eine zweite Schicht aus mindestens einem zweiten Material auf Basis von Siliziumcarbid ausgebracht wird umfasst, wobei mindestens eines der Materialien auf Basis von Siliziumcarbid Diamantpartikel umfasst, wobei es sich bei den Diamantpartikeln um Diamantpartikeln handelt, die ausgewählt sind aus der Gruppe bestehend aus Nano-Diamantpartikeln, Mikro-Diamantpartikeln und Mischungen davon, wobei die Nano-Diamantpartikel eine Partikelgröße von 40 bis 160 nm aufweisen und die Mikro-Diamantpartikel eine Partikelgröße von 3 bis 300 µm aufweisen, jeweils bestimmt mittels Laserdiffraktometrie, **dadurch gekennzeichnet, dass** das mindestens erste und/oder das mindestens zweite Material in Form eines Schlickers ausgebracht wird.

2. Verfahren nach Anspruch 1, **dadurch gekennzeichnet, dass** das additive Fertigungsverfahren ausgewählt ist aus der Gruppe bestehend aus Stereolithographie (SL), material jetting/direct ink printing (DIP), direct ink writing (DIW), robocasting (FDM), binder jetting (3DP), selektivem Lasersintern und Kombination dieser Verfahren.

3. Verfahren nach einem oder mehreren der vorangehenden Ansprüche, **dadurch gekennzeichnet, dass** das erste Material auf Basis von Siliziumcarbid und das zweite Material auf Basis von Siliziumcarbid gleich oder verschieden sind.

4. Verfahren nach einem oder mehreren der vorangehenden Ansprüche, **dadurch gekennzeichnet, dass** die Nano-Diamantpartikel eine Partikelgröße von 50 bis 150 nm aufweisen und die Mikro-Diamantpartikel eine Partikelgröße von 4 bis 100 µm aufweisen, jeweils bestimmt mittels Laserdiffraktometrie.

5. Verfahren nach einem oder mehrerer der vorangehenden Ansprüche, **dadurch gekennzeichnet, dass** das Verfahren die folgenden Schritte umfasst:
a) Ausbringen eines ersten Materials auf Basis von Siliziumcarbid;
b) Ausbringen eines Binders gemäß der gewünschten Geometrie des späteren Bauteils;
c) optional Trocknen des Binders;
d) Ausbringen eines zweiten Materials auf Basis von Siliziumcarbid;
e) Ausbringen eines Binders gemäß der gewünschten Geometrie des späteren Bauteils;
f) optional Trocknen des Binders; und
g) Wiederholen der Schritte a) bis f) bis zum Erhalt des gewünschten Bauteils,
wobei mindestens eines der beiden Materialien auf Basis von Siliziumcarbid Diamantpartikel umfasst.

6. Bauteil erhältlich nach einem Verfahren gemäß einem oder mehrerer der Ansprüche 1 bis 5, **dadurch gekennzeichnet, dass** das Bauteil mindestens eine makroskopisch strukturierte Oberfläche, insbesondere Vorsprünge und/oder Absätze, und/oder innenliegende Strukturen, insbesondere Kanäle, aufweist.

7. Bauteil gemäß Anspruch 6, **dadurch gekennzeichnet, dass** das Bauteil eine Konzentration an Diamantpartikeln von 30 bis 80 Vol.-%, vorzugsweise 40 bis 70 Vol.-% aufweist.

8. Bauteil gemäß einem oder beiden der Ansprüche 6 und 7, **dadurch gekennzeichnet, dass** die Partikelgröße der Diamantpartikel über das Gesamtvolumen des Bauteils variiert.

9. Verwendung von in eine Siliziumcarbid-Matrix eingebetteter Diamantpartikel in einem Schlicker in additiven Fertigungsmethoden, **dadurch gekennzeichnet, dass** die Diamantpartikel eine Partikelgröße von 3 bis 300 µm, vorzugsweise 4 bis 100 µm und 40 bis 160 nm, vorzugsweise 50 bis 150 nm aufweisen, jeweils bestimmt mittels Laserdiffraktometrie.

10. Verwendung gemäß einem oder beiden der Ansprüche 9, **dadurch gekennzeichnet, dass** das additive Fertigungsverfahren ausgewählt ist aus der Gruppe bestehend aus Stereolithographie (SL), material jetting/direct ink printing (DIP), direct ink writing (DIW), robocasting (FDM), binder jetting (3DP), selektivem Lasersintern und Kombination dieser Verfahren.

## Claims

1. A process for preparing a component by using additive manufacturing methods, **characterized in that** the component has diamond particles embedded in a silicon carbide matrix, **characterized in that** said process comprises a step in which a first layer of at least one first material based on silicon carbide is deposited, and another step in which a second layer of at least one second material based on silicon carbide is deposited, wherein at least one of said materials based on silicon carbide includes diamond particles, wherein the diamond particles are diamond particles selected from the group consisting of nanodiamond particles, microdiamond particles, and mixtures thereof, wherein said nanodiamond particles have a particle size of from 40 to 160 nm, and said microdiamond particles have a particle size of from 3 to 300 µm, respectively determined by laser diffractometry, **characterized in that** said at least first and/or said at least second material are deposited in the form of a slip.

2. The process according to claim 1, **characterized in that** the additive manufacturing method is selected from the group consisting of stereolithography (SL), material jetting/direct ink printing (DIP), direct ink writing (DIW), robocasting (FDM), binder jetting (3DP), selective laser sintering, and combinations of such methods.

3. The process according to one or more of the preceding claims, **characterized in that** the first material based on silicon carbide and the second material based on silicon carbide are the same or different.

4. The process according to one or more of the preceding claims, **characterized in that** said nanodiamond particles have a particle size of from 50 to 150 nm, and said microdiamond particles have a particle size of from 4 to 100 µm, respectively determined by laser diffractometry.

5. The process according to one or more of the preceding claims, **characterized in that** the process comprises the following steps:
a) depositing a first material based on silicon carbide;
b) depositing a binder in accordance with the desired geometry of the later component;
c) optionally drying the binder;
d) depositing a second material based on silicon carbide;
e) depositing a binder in accordance with the desired geometry of the later component;
f) optionally drying the binder; and
g) repeating steps a) to f) until the desired component has been obtained;
wherein at least one of the two materials based on silicon carbide includes diamond particles.

6. A component obtainable by a process according to one or more of claims 1 to 5, **characterized in that** said component has at least one macroscopically structured surface, especially protrusions and/or steps, and/or interior structures, especially channels.

7. The component according to claim 6, **characterized in that** the component has a concentration of diamond particles of from 30 to 80% by volume, preferably from 40 to 70% by volume.

8. The component according to one or both of claims 6 and 7, **characterized in that** the particle size of the diamond particles varies over the total volume of the component.

9. Use of diamond particles embedded in a silicon carbide matrix in a slip in additive manufacturing methods, **characterized in that** the diamond particles have a particle size of from 3 to 300 µm, preferably from 4 to 100 µm, and from 40 to 160 nm, preferably from 50 to 150 nm, respectively determined by laser diffractometry.

10. The use according to one or both of claims 9, **characterized in that** the additive manufacturing method is selected from the group consisting of stereolithography (SL), material jetting/direct ink printing (DIP), direct ink writing (DIW), robocasting (FDM), binder jetting (3DP), selective laser sintering, and combinations of such methods.

## Revendications

1. Procédé pour fabriquer un composant par des procédés de fabrication additifs, **caractérisé en ce que** ledit composant présente des particules de diamant incorporées dans une matrice de carbure de silicium, **caractérisé en ce que** ledit procédé comprend une étape dans laquelle une première couche consistant en au moins un premier matériau à base de carbure de silicium est déposée, et une autre étape dans laquelle une deuxième couche consistant en au moins un deuxième matériau à base de carbure de silicium est déposée, dans lequel au moins l'un des matériaux à base de carbure de silicium comprend des particules de diamant, dans lequel lesdites particules de diamant sont des particules de diamant choisies dans le groupe consistant en nanoparticules de diamant, microparticules de diamant, et des mélanges de ceux-ci, dans lequel lesdites nanoparticules de diamant présentent une taille de particules de 40 à 160 nm, et lesdites microparticules de diamant présentent une taille de particules de 3 à 300 µm, à chaque fois déterminées par diffractométrie laser, **caractérisé en ce que** ledit au moins un premier matériau et/ou ledit au moins un deuxième matériau sont déposés sous forme de bouillie.

2. Procédé selon la revendication 1, **caractérisé en ce que** ledit procédé de fabrication additif est choisi dans le groupe consistant en stéréolithographie, lançage de matériaux/impression à l'encre directe (DIP), écriture à l'encre directe (DIW), robocasting (FDM), lançage de liant (3DP), frittage au laser sélectif, et une combinaison de ces procédés.

3. Procédé selon l'une ou plusieurs des revendications précédentes, **caractérisé en ce que** ledit premier matériau à base de carbure de silicium et ledit deuxième matériau à base de carbure de silicium sont identiques ou différents.

4. Procédé selon l'une ou plusieurs des revendications précédentes, **caractérisé en ce que** lesdites nanoparticules de diamant présentent une taille de particules de 50 à 150 nm, et lesdites microparticules de diamant présentent une taille de particules de 4 à 100 µm, à chaque fois déterminées par diffractométrie laser.

5. Procédé selon l'une ou plusieurs des revendications précédentes, **caractérisé en ce que** le procédé comprend les étapes suivantes consistant à :
a) déposer un premier matériau à base de carbure de silicium,
b) déposer un liant selon la géométrie désirée du futur composant,
c) éventuellement sécher le liant,
d) déposer un deuxième matériau à base de carbure de silicium,
e) déposer un liant selon la géométrie désirée du futur composant,
f) éventuellement sécher le liant, et
g) répéter les étapes a) à f) jusqu'à ce que le composant désiré soit obtenu,
dans lequel au moins l'un des deux matériaux à base de carbure de silicium comprend des particules de diamant.

6. Composant pouvant être obtenu par un procédé selon l'une ou plusieurs des revendications 1 à 5, **caractérisé en ce que** ledit composant présente au moins une surface structurée macroscopiquement, notamment des saillies et/ou des paliers, et/ou des structures intérieures, notamment des canaux.

7. Composant selon la revendication 6, **caractérisé en ce que** ledit composant présente une concentration de particules de diamant de 30 à 80 % en volume, de préférence de 40 à 70 % en volume.

8. Composant selon l'une ou les deux revendications 6 et 7, **caractérisé en ce que** la taille des particules de diamant varie sur la totalité du volume du composant.

9. Utilisation de particules de diamant incorporées dans une matrice de carbure de silicium dans une bouillie dans des procédés de fabrication additifs, **caractérisée en ce que** lesdites particules de diamant présentent une taille de particules de 3 à 300 µm, de préférence de 4 à 100 µm et de 40 à 160 nm, de préférence de 50 à 150 nm, à chaque fois déterminées par diffractométrie laser.

10. Utilisation selon l'une ou les deux revendications 9, **caractérisée en ce que** ledit procédé de fabrication additif est choisi dans le groupe consistant en stéréolithographie, lançage de matériaux/impression à l'encre directe (DIP), écriture à l'encre directe (DIW), robocasting (FDM), lançage de liant (3DP), frittage au laser sélectif, et une combinaison de ces procédés.
